# EUROPEAN PATENT SPECIFICATION

(11) **EP 4 627 144 B1**
(45) Date of publication and mention of the grant of the patent: **04.03.2026**
(21) Application number: 23837738.6
(22) Date of filing: 27.12.2023
(51) Int. Cl.: D01F 13/02, D01D 1/02, D01D 5/06, D01F 2/02, D01F 2/24, C08B 16/00, C01D 1/28, C01D 7/24

(54) **METHOD OF RECYCLING AN AQUEOUS ALKALINE SPIN BATH**
CELLULOSE TEXTILFASER
FIBRES TEXTILES CELLULOSIQUES

(30) Priority: 05.01.2023 WO PCT/FI2023/050009; 04.07.2023 FI 20235792
(43) Date of publication of application: 08.10.2025
(73) Proprietor: Infinited Fiber Company Oy, 02150 Espoo (FI)
(72) Inventor: STJERNBERG, Martin, 02150 Espoo (FI); NUOPPONEN, Markus, 02150 Espoo (FI)
(74) Representative: Laine IP Oy
(86) International application number: PCT/FI2023/050740
(87) International publication number: WO 2024/146979

(56) References cited:
- US-A- 4 639 515
- US-A1- 2016 138 200
- US-A1- 2019 062 950
- US-A1- 2022 112 628

## Description

### FIELD

The present invention relates to a method of recycling an aqueous alkaline spin bath of cellulose spinning, especially an aqueous alkaline spin bath of cellulose carbamate spinning dope in manufacture of cellulose carbamate textile fibre.

### BACKGROUND

Cellulose is the most widely used biopolymer in the world and it finds applications in various industries such as the paper and cardboard industry, and the textile industry as both cellulose and derivatives of cellulose, such as cellulose carbamate, cellulose acetate, ethers and esters. The use of cellulose in these industries, however, requires the cellulose fibre to be dissolved in order to regenerate the structure. The dissolution of cellulose is difficult because of its semi-crystalline structure, strong hydrogen bonds in the polymer sheets and the presence of both hydrophilic and hydrophobic ends in the polymer. For this reason, cellulose requires either a modification of the structure by derivatization or an opening of the fibres and an increase in reactivity.

Several methods of derivatization are known in the art, the most well-known perhaps being the viscose process, in which cellulose is first treated with an alkali and then with carbon disulphide to produce cellulose xanthate. The viscose process is shunned more and more due to the toxic nature of carbon disulfide and the undesirable environmental impact that the viscose process has. More and more other derivatization processes are being turned to, particularly those that are inexpensive, do not have the toxicity issues and environmental issues of the viscose process and yet still can be carried out using the available infrastructure, *e.g.* can be carried out in viscose wet spinning mills.

However, there is an increasing interest towards more environmentally friendly processes of regenerating cellulose fibres to avoid use of harmful chemicals, such as carbon disulphide. Carbamation process for the production of cellulose carbamate is one such process. Cellulose carbamate is formed by reacting cellulose with urea. Thus, cellulose has been dissolved in an alkaline agent, such as sodium hydroxide, and transferred into a cellulose spinning in a coagulation bath to obtain cellulose fibres. In some embodiment, coagulation is carried out in an acidic spin bath containing for example sulphuric acid. Such spin bath requires vast amounts of sulphuric acid to neutralize sodium hydroxide in the cellulose carbamate spinning dope, simultaneously producing unnecessary waste streams of sodium sulphate.

Use of an alkaline spin bath provides an option for the acidic spin bath. Typically, cellulose is dissolved in an aqueous sodium hydroxide solution to provide a cellulose carbamate spinning dope that is fed into a coagulation bath comprising an alkaline coagulation salt, for example an aqueous coagulation sodium salt solution, e.g. Na₂CO₃. Regenerated fibres are formed in the coagulation bath, and subsequently removed as a tow bringing along also some coagulation salts and sodium hydroxide present in the coagulation bath. Thus, there is also a need for recycling of chemicals, especially chemicals that are used for dissolution and coagulation of the cellulose, to obtain an environmentally sustainable process.

Method of recovering sodium hydroxide and sodium coagulation salt from an aqueous alkaline composition is described in patent publication EP 3969645. The aqueous composition is cooled to precipitate a first portion of the coagulation salt, the precipitate is separated, water is evaporated from the remaining aqueous solution and a second portion of the coagulation salt is precipitated and separated.

Recovering and recycling of chemicals of an alkali solution of cellulose carbamate is also described in patent publication GB 2164943. Sodium carbonate is crystalized from the mother liquid solution and returned to the precipitation solution of the cellulose carbamate dope, whereas the mother liquid containing sodium hydroxide is returned to a step of dissolving cellulose carbamate.

Publication US 4639515 A discloses a cyclic process for producing an alkali aqueous solution of cellulose carbamate, for precipitating the cellulose carbamate from the alkali solution and for recovering and recycling the remaining chemicals. Recovery of sodium hydroxide from withdrawn portion of a coagulation bath comprising coagulation sodium salt and sodium hydroxide by cooling to precipitate solid coagulation sodium salt and to recover sodium hydroxide is disclosed in US publication 2019/062950 A1.

Publication US 2022/112628 A1 presents washing out of zinc compounds from a fiber tow and facilitating recycling of zinc in the process for reuse in spin dope preparation.

There is still a need to provide solutions for efficient recycling of the chemicals of alkaline spin baths.

### SUMMARY OF THE INVENTION

It is an aim of the present invention to provide an improved method of recycling an aqueous alkaline spin bath of a cellulose spinning, especially an aqueous alkaline spin bath of cellulose carbamate spinning dope. In particular, the aim is to produce cellulose filaments or fibres of good quality in a spinning cycle in which the chemical recycling is optimized, i.e. different raw materials are recovered and preferably recycled back to the different stages of the fibre manufacture process. Sodium hydroxide is preferably recovered at least essentially free of a coagulation salt and returned back to a cellulose carbamate dissolution stage, wherein the coagulation salt does not interfere the dissolution. The coagulation salt, in turn, is recovered as pure as possible (at least essentially free of sodium hydroxide). In particular, the coagulation salt is preferably recovered essentially free of zinc/ zinc ions and with minimum amount of sodium hydroxide, wherein zinc/ zinc ions preferably remain with the recovered sodium hydroxide. It is not harmful if small amounts of zinc and/or sodium hydroxide remains in the recovered coagulation salt. Further, coagulation or spin bath circulation system is kept in as closed-loop as possible i.e. a semi closed loop, thus avoiding emissions to wastewaters.

According to a first aspect of the present invention, there is provided a method of recycling an aqueous alkaline spin bath used in manufacture of cellulose carbamate textile fibre, the method comprising the steps of feeding a cellulose carbamate spinning dope into an aqueous alkaline spin bath in a spinning unit, wherein the aqueous alkaline spin bath comprises an alkaline coagulation salt, in particular sodium carbonate, aqueous sodium hydroxide, zinc, free ammonia and other nitrogenous compounds, withdrawing a portion of the aqueous alkaline spin bath, evaporating at least part of water and/or free ammonia present in the withdrawn portion of the aqueous alkaline spin bath to obtain a concentrated aqueous alkaline spin bath, subjecting the concentrated aqueous alkaline spin bath to a first vacuum crystallization to recover a first part of the coagulation salt, concentrating the remaining spin bath by evaporation to obtain a further concentrated spin bath, subjecting the further concentrated spin bath to a second vacuum crystallization to recover a second part of the coagulation salt and to obtain a mother liquor of the spin bath, and returning at least part of the recovered coagulation salt back to the aqueous alkaline spin bath.

The withdrawn portion subjected to recycling may also comprise withdrawn portions of aqueous stretching and/or washing baths and/or alkali hydrolysis liquor used in an optional after-treatment step (alkaline hydrolysis of carbamate groups) of the formed fibres or filaments.

According to a second aspect of the present invention, there is provided a method for manufacture of cellulose carbamate textile fibre, comprising the steps of dissolving cellulose carbamate in an aqueous sodium hydroxide medium to form a cellulose carbamate spinning dope, wherein the cellulose carbamate spinning dope comprises zinc, spinning the cellulose carbamate spinning dope into an aqueous alkaline spin bath in a spinning unit to form filaments or filament tow, stretching the filaments or filament tow to obtain stretched cellulose carbamate fibres, and withdrawing a portion of the aqueous alkaline spin bath from the spinning unit for recycling, especially for recycling according to the first aspect of the present invention.

The invention is defined by the features of the independent claim. Some specific embodiments are defined in the dependent claims.

Significant advantages are obtained by the present invention. The present method provides an optimized method for chemical recycling of an alkaline spin bath of cellulose spinning. The method enables recovering and recycling essentially all of the components without any waste streams or by-products that are not suitable to be used in the present method. In particular, the method enables recovering an alkaline coagulation salt at least essentially free of zinc ions, whereas sodium hydroxide is recovered preferably both as a chemically pure sodium hydroxide and together with zinc/ zinc ions. Thus, the recovered coagulation salt can be recycled back to the coagulation bath, i.e. spin bath in the spinning unit, without increasing the zinc ion concentration of the coagulation bath, and sodium hydroxide can be recycled to a cellulose carbamate dissolution stage of forming the cellulose carbamate spinning dope.

In particular, the recycling of the present invention enables maintaining sodium hydroxide and sodium carbonate contents of the spin bath in the spinning unit in preferred ranges for continuous spinning of cellulose, especially cellulose carbamate spinning dope. Indeed, cellulose carbamate spinning dope is alkaline and thus sodium hydroxide also enters the spin bath in the spinning unit together with the cellulose carbamate spinning dope, thereby increasing the sodium hydroxide content of the spin bath in the spinning unit. The present recycling method of the spin bath enables that the amount of sodium hydroxide does not increase too high in the spin bath in the spinning unit. Sodium hydroxide is preferably concentrated during the recycling as a mother liquor of the spin bath and it can then be recycled back to the dissolution step of cellulose carbamate. Zinc is also recovered and preferably recycled to the step of producing the cellulose carbamate spinning dope. In particular, zinc is recovered as being dissolved in the mother liquor, i.e. in the aqueous solution of the sodium hydroxide, wherein that part of the zinc does not have to be re-dissolved. Thus, zinc can be recycled together with the sodium hydroxide, preferably as sodium zincate solution, without need for separate dissolving step of zinc.

Optionally the recovered chemically pure sodium hydroxide can, for example, be used to dissolve fresh feed of zinc (in the form of zinc oxide and/or zinc hydroxide) that is most likely needed in addition to the recycled zinc in the production of cellulose carbamate dope.

Further, recycling prevents accumulation of impurities (coming from the raw materials) and nitrogen residues from the carbamation process into the spin bath, since those can be removed during the recycling, preferably as ammonia water. Evaporated ammonia can be recovered and treated by the scrubber to turn ammonia gas steams into ammonia water solution, which is a sellable byproduct, ammonia emissions to air is simultaneously mitigated. Thus, the present method also takes nitrogen recycling into account.

Embodiments of the present invention enable production of high quality cellulose carbamate filaments or fibres combined with efficient chemical recycling. Thus, in the present invention the spinning process achieves high level chemical recycling without compromising the fibre properties. Further, the used vacuum crystallization is energy efficient and the released energy therefrom can be recovered and re-used in the method.

### BRIEF DESCRIPTION OF THE DRAWING

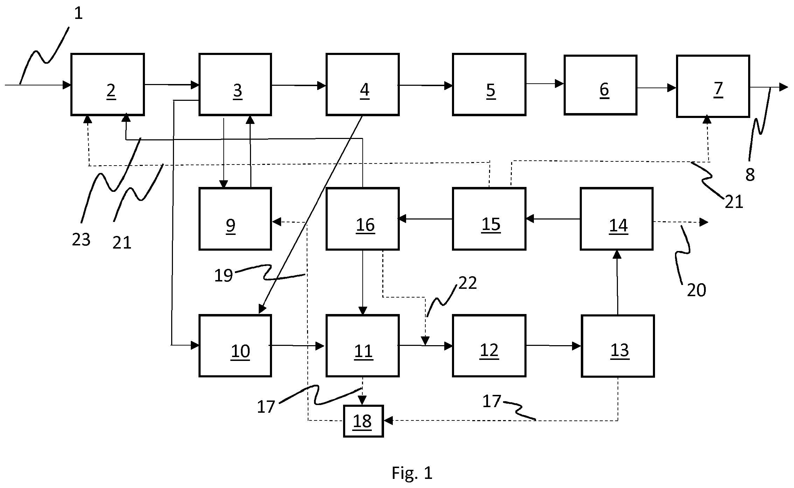

FIGURE 1 schematically illustrates a method according to an embodiment.

### EMBODIMENTS

Embodiments of the present technology provide an improved method of recycling an aqueous alkaline spin bath. In various embodiments, the method of recycling an aqueous alkaline spin bath has been made sustainable by significantly improving the efficiency of the chemical recycling of the spinning process.

Embodiments comprise providing an aqueous alkaline spin bath of cellulose spinning, withdrawing a portion of the aqueous spin bath, evaporating at least part of water and/or free ammonia present in the withdrawn portion of the aqueous spin bath, subjecting the aqueous spin bath to a first vacuum crystallization, concentrating the remaining spin bath by evaporation and subjecting the concentrated spin bath to a second vacuum crystallization, wherein a coagulation salt of the spin bath is recovered by the vacuum crystallization steps. At least part of the recovered coagulation salt is returned back to the spin bath that is then circulated to the spinning unit.

Thus, according to one embodiment, the method of recycling an aqueous alkaline spin bath used in manufacture of cellulose carbamate textile fibre, comprises the steps of
- providing an aqueous alkaline spin bath comprising sodium carbonate as an alkaline coagulation salt, aqueous sodium hydroxide, zinc, free ammonia and other nitrogenous compounds,
- withdrawing a portion of the aqueous alkaline spin bath,
- evaporating at least part of water and/or free ammonia present in the withdrawn portion of the aqueous spin bath to obtain a concentrated aqueous spin bath,
- subjecting the concentrated aqueous spin bath to a first vacuum crystallization to recover a first part of the sodium carbonate and to obtain a remaining spin bath,
- concentrating the remaining spin bath by evaporation to obtain a further concentrated spin bath,
- subjecting the further concentrated spin bath to a second vacuum crystallization to recover a second part of the sodium carbonate and to obtain a mother liquor of the spin bath, and
- returning at least part of the recovered sodium carbonate back to the aqueous alkaline spin bath.

In a further embodiment, the method of recycling an aqueous alkaline spin bath used in manufacture of cellulose carbamate textile fibre, comprises the steps of
- feeding a cellulose carbamate spinning dope into an aqueous alkaline spin bath in a spinning unit, wherein the aqueous alkaline spin bath comprises sodium carbonate as an alkaline coagulation salt, aqueous sodium hydroxide, zinc, free ammonia and other nitrogenous compounds,
- withdrawing a portion of the aqueous alkaline spin bath,
- evaporating at least part of water and/or free ammonia present in the withdrawn portion of the aqueous spin bath to obtain a concentrated aqueous spin bath,
- subjecting the concentrated aqueous spin bath to a first vacuum crystallization to recover a first part of the sodium carbonate and to obtain a remaining spin bath,
- concentrating the remaining spin bath by evaporation to obtain a further concentrated spin bath,
- subjecting the further concentrated spin bath to a second vacuum crystallization to recover a second part of the sodium carbonate and to obtain a mother liquor of the spin bath, and
- returning at least part of the recovered sodium carbonate back to the aqueous alkaline spin bath.

According to a preferred embodiment, the method of the present invention is a continuous process, i.e. cellulose carbamate spinning dope is fed and processed continuously into the spin bath in the spinning unit, wherein a portion of the aqueous spin bath is also continuously withdrawn from the spinning unit.

In a first step of an embodiment, an aqueous alkaline spin bath, in particular an aqueous alkaline spin bath used in cellulose carbamate spinning, is provided. In one embodiment, the aqueous alkaline spin bath is provided by feeding a cellulose carbamate spinning dope, preferably continuously, into an aqueous alkaline spin bath comprising a coagulation salt, especially an alkaline coagulation salt, in particular sodium carbonate. Thus, after feeding the cellulose carbamate spinning dope into the aqueous alkaline spin bath, the aqueous alkaline spin bath comprises sodium carbonate as an alkaline coagulation salt, aqueous sodium hydroxide, zinc, free ammonia and other nitrogenous compounds.

Thus, according to one embodiment, the first step of the method comprises feeding a cellulose carbamate spinning dope into an aqueous alkaline spin bath in a spinning unit, wherein the aqueous alkaline spin bath comprises sodium carbonate as an alkaline coagulation salt, aqueous sodium hydroxide, zinc, free ammonia and other nitrogenous compounds.

The cellulose carbamate used in the present invention can be obtained from any source of cellulose. Cellulose carbamate is formed by reacting cellulose with urea. Formation of cellulose carbamate is described in more detail for example in patent publication WO 2022180309.

Typically, cellulose carbamate is obtained from cellulose pulp, such as dissolving pulp. Chemical pulp or dissolving pulp can be prepared from wood species such as pine, spruce, birch, beech, aspen, maple, larch, acacia, eucalyptus, hemlock, tupelo, and oak or non-woods such as stalk fibres (wheat straw, rice straw, barley straw, bamboo, bagasse and reed). The origin of the feedstock can be either the virgin form of the chemical or dissolving pulp or the recycled feedstocks such as recycled paper and/or cardboard containing chemical pulp or dissolving type pulp.

Natural plant fibres can be used as such in or in the form of chemical pulp or dissolving pulp. The origin of natural plant fibres can be either their virgin forms or natural plant fibre containing textiles or recycled natural fibre containing textiles. Natural plant fibres include seed fibres such as cotton and kapok; bast fibres such as hemp, jute, kenaf, ramie, abaca and linen (flax); leaf fibres such as manilla, sisal, ananas and banana; fruit fibres such as coir.

Thus, in one embodiment, a recycled fibrous feedstock is used as a raw material for producing cellulose carbamate. According to an embodiment, the cellulose carbamate comprises cellulose carbamate obtained from cellulose containing waste material, the waste material being preferably selected from a group consisting of textile waste, paper waste, cardboard waste, agro waste and mixtures thereof. Preferably at least 25 wt-%, more preferably at least 50 wt-%, of the cellulose carbamate is obtained from cellulose containing waste material. By waste material it is meant material collected for recycling, such as used textiles, papers or cardboard. Agro waste means various plant-based materials that cannot be used as human or animal food, such as crop residues, straw, weeds, leaf litter, sawdust and forest waste.

In one embodiment, the cellulose carbamate spinning dope contains cellulose carbamate dissolved in aqueous sodium hydroxide. In a further embodiment, the cellulose carbamate spinning dope is formed in the presence of a zinc compound, preferably zinc oxide and/or zinc hydroxide. The zinc oxide and/or hydroxide may be added to the cellulose carbamate, to the aqueous alkaline solution or to the mixture of cellulose carbamate and aqueous alkaline solution. Typically, the zinc oxide and/or zinc hydroxide is dissolved in aqueous alkaline solution, especially by heating, wherein zincate, in particular sodium zincate, is formed, prior to its use as a dissolving lye for the provided cellulose carbamate. Preferably at least part of the zinc of the present invention is provided as readily dissolved in an aqueous alkaline solution as obtained from the recycling of the spin bath.

Thus, in one embodiment, the cellulose carbamate spinning dope is provided by dissolving cellulose carbamate in an aqueous sodium hydroxide medium, wherein the cellulose carbamate spinning dope comprises a dissolved zinc compound.

According to one specific embodiment, the cellulose carbamate spinning dope comprises 8-11 wt-%, preferably 8.5-10 wt-%, of cellulose carbamate, 5-8 wt-% sodium hydroxide and 0.08-1.6 wt-%, preferably 0.08-1.2 wt-%, of zinc. Preferably, the balance of the cellulose carbamate spinning dope is water. The cellulose carbamate spinning dope may also comprise processing aids and/or other additives, such as polyethylene glycol (PEG) that is especially used as a spinning dope activator. The weight percentages (wt-%) being calculated from the total weight of the cellulose carbamate spinning dope. If zinc oxide (ZnO) is used, the amounts are preferably 0.1-2 wt-%, more preferably 0.1-1.5 wt-%. It is also possible to use other zinc compounds, such as zinc hydroxide or mixture of zinc oxide and hydroxide for preparation of sodium zincate. Indeed, the cellulose carbamate may be dissolved in an aqueous alkaline solution made of sodium hydroxide and zinc oxide and/or zinc hydroxide.

After feeding the cellulose carbamate spinning dope into the spin bath, the spin bath comprises aqueous sodium hydroxide (includes water), zinc and alkaline coagulation salt. Zinc can be in the form of ionic zinc compounds and/or complexes, such as zincate, zinc hydroxide and/or zinc oxide. Further, the spin bath typically comprises nitrogenous compounds, such as free ammonia, ammonium ions, unreacted urea and/or non-urea compounds like biuret, and optional additives, such as polyethylene glycol (PEG) as a spinning dope activator. The nitrogenous compounds present in the spin bath are water-soluble nitrogenous by-products formed in a carbamation reaction of forming cellulose carbamate.

In one embodiment, the amount of nitrogenous compounds in the aqueous alkaline spin bath is affected by the temperature of the cellulose carbamate spinning dope and the delay between the dissolution of cellulose carbamate and coagulation of the cellulose carbamate occurring in the spin bath in the spinning unit. That is because cellulose carbamate starts to hydrolyse after dissolution in alkaline conditions. The higher the temperature and the longer the delay, the higher is the rate of hydrolysis of the cellulose carbamate and the lower is the amount of carbamate groups bound in cellulose, i.e. the nitrogen content bound in cellulose. Thus, the rate of the hydrolysis typically determines the amount of water-soluble nitrogenous compounds in the cellulose carbamate spinning dope.

Thus, according to one embodiment, nitrogenous compounds present in the spin bath originate from cellulose carbamate (due to hydrolysis of cellulose carbamate) and urea residues coming along with the cellulose carbamate spinning dope.

In one embodiment, the amount of nitrogen of the nitrogen compounds (does not include nitrogen bound to the cellulose carbamate) in the cellulose carbamate spinning dope is in the range of 0.03 to 0.12 wt.%, preferably 0.06 to 0.10 wt.%, calculated from the total weight of the cellulose carbamate spinning dope.

The cellulose carbamate spinning dope is, preferably continuously, fed into the spin bath in the spinning unit. Preferably, the cellulose carbamate spinning dope is fed into the spinning unit through one or more spinnerets. One spinning head may comprise for example 45 spinnerets having for example 2000 holes in each spinneret. For example, a wet spinning line producing staple fibres may have at least 60 spinning heads coupled in the same spin bath system. The cellulose carbamate spinning dope is fed into the spinning unit through spinnerets at a suitable flow rate. The cellulose carbamate is coagulated and while being extruded through spinnerets it will be shaped into filaments. Preferably, at least essentially all, i.e. at least 99 wt.%, of the cellulose carbamate coagulates and is shaped into filaments. Additionally, or alternatively, the cellulose carbamate spinning dope is fed into the spinning unit through spinnerets at a flow rate of 20 - 90 m / min, or 40 - 65 m/ min.

In the present context, the term "steady-state" is used generally to designate conditions, such as concentration of components that do not change appreciably with time. In preferred embodiment, the steady-state conditions of the spin bath correspond to the conditions of the withdrawn portion of the spin bath before recycling.

According to an embodiment, in a continuous process that has reached steady-state operation conditions, the sodium hydroxide content of the spin bath is maintained at up to 2 wt.%, preferably within a range of 1.0-1.99 wt-%, more preferably 1.5-1.9 wt-%. According to another embodiment, the alkaline spin bath comprises sodium hydroxide and sodium carbonate at a weight ratio of 1:11-1:20. According to yet another embodiment, the sodium carbonate content of the spin bath is maintained at up to 30 wt.%, preferably within a range of 22-30 wt-%, more preferably 23-29 wt-%, in particular 24-28 wt-%. According to a preferred embodiment, the sodium hydroxide content of the spin bath is maintained within a range of 1.0-1.99 wt-% while the sodium carbonate content of the spin bath is maintained within a range of 22-30 wt-%. According to another preferred embodiment, the sodium hydroxide content of the spin bath is maintained within a range of 1.5-1.9 wt-% while the sodium carbonate content of the spin bath is maintained within a range of 23-29 wt-%, or 24-28 wt-%. The portion of aqueous spin bath withdrawn from the spinning unit thus has at least 22 wt-% of sodium carbonate, preferably at least 23 wt-%, in particular at least 24 wt-% of sodium carbonate. The alkaline spin bath thus comprises sodium carbonate in the range of 22-30 wt-%, preferably in the range of 23-29 wt-%, in particular in the range of 24-28 wt-%. The weight percentages (wt-%) being calculated from the total weight of the spin bath.

The amount of sodium hydroxide and sodium carbonate in the spin bath varies during the process, from one location of the spin bath to another, since sodium hydroxide is added to the spin bath along with the cellulose carbamate spinning dope. The above identified amounts are an arithmetic average of the amounts within the spin bath.

Further, the amount of zinc precipitated in the spin bath is preferably minimized. Thus, an aim is that a part of the zinc is soluble in spin bath and is recycled and a part of the zinc is removed from the spin bath with the fibre or filament, and is later washed out and recycled separately. Furthermore, in one embodiment, the temperature of the spin bath, namely 35-80 °C, preferably 40-60 °C, more preferably 45-55 °C, has been optimised to speed up the formation of the fibre, while increasing solubility of zinc, even though the sodium hydroxide content of the spin bath is low, preferably 1.0-1.99 wt.%. Thus, the combination of the selected content of sodium hydroxide and the temperature in the spin bath has been observed to lead to improved results.

A further advantage of using the preferred ranges of sodium hydroxide in the spin bath is that at such ranges it is still economically reasonable to recycle the spin bath. The volumes of spin bath that need to be recycled is very large for industrial scale operation, if the sodium hydroxide content of the spin bath is not maintained at the minimum of 1.0 wt-%.

According to one embodiment, the temperature of the alkaline spin bath in the spinning unit is 40-70 °C, preferably 45-65 °C, more preferably 50-60 °C, to accelerate coagulation. These preferred temperatures of the spin bath have been observed to even further speed up the formation of the fibre, while increasing solubility of zinc, even though the sodium hydroxide content of the spin bath is low.

According to one embodiment, in the next step a portion of the aqueous alkaline spin bath is withdrawn from the spinning unit, in particular withdrawn for recycling. The withdrawn aqueous spin bath comprises aqueous sodium hydroxide, zinc, alkaline coagulation salt, in particular sodium carbonate, free ammonia and other nitrogenous compounds, such as ammonium ions.

According to one embodiment, the withdrawn portion of the aqueous alkaline spin bath of cellulose carbamate spinning dope comprises 1.0 to 1.99 wt.%, preferably 1.5-1.9 wt-%, of sodium hydroxide and 22 to 30 wt.%, preferably 23-29 wt.%, more preferably 24-28 wt.%, of sodium carbonate, calculated from the total weight of the withdrawn portion of the aqueous alkaline spin bath.

According to one embodiment, the withdrawn portion of the aqueous alkaline spin bath exhibits a density of 1200 to 1400 kg/m³, preferably 1250 to 1350 kg/m³ (measured at 20 °C). The withdrawn portion preferably has a pH in the range of 12 to 13, preferably 12.2 to 12.8, more preferably 12.4 to 12.5.

According to one embodiment, 1 to 20 wt.%, preferably 5 to 15 wt.%, for example 7 to 12 wt.%, of the aqueous alkaline spin bath is withdrawn for recycling process (i.e. to the recovery of the components of the spin bath), calculated from the total weight of the aqueous alkaline spin bath circulating through the spinning unit, i.e. circulating between the spinning unit and a spin bath tank that is used for adjusting the composition of the spin bath.

Similarly, according to one embodiment, portions of the liquid phase of the stretching and/or washing baths, especially stretching bath, and/or alkali hydrolysis liquor are withdrawn, preferably continuously withdrawn, for recycling. In a preferred embodiment, the withdrawn portions of the spin bath and optional stretching and/or washing baths and/or alkali hydrolysis liquor are combined and recycled together. Withdrawn portions can for example be withdrawn into a same tank, from which the combined withdrawn portions can be subjected to recycling.

The stretching bath is part of a stretching unit. The stretching unit may comprise one or more stretching baths, which typically contain sodium hydroxide and sodium carbonate in amounts that are approximately 2/3 of the amounts in the spin bath. Thus, the amount of sodium hydroxide in the stretching unit is about 0.66-1.32 wt-% and the amount of sodium carbonate less than 20 wt-%, such as 14.5-19.9 wt-%. The weight percentages (wt-%) being calculated from the total weight of the stretching bath. The optimal salt concentration is maintained in the stretching bath to enhance filament or filament tow formation under the stretching. The amount of sodium hydroxide and sodium carbonate in the (horizontal) stretching bath varies. A part of the more concentrated spin bath composition drifts with the fibre or filament into the stretching bath. Thus, the stretching bath balance is maintained by water and/or circulated salt composition. The amount of sodium hydroxide and sodium carbonate that is returned to the stretching bath needs to be lower than the desired amount of sodium hydroxide and sodium carbonate in the stretching bath circulation. The above-defined amounts are an arithmetic average of the amounts within the stretching bath.

The washing bath is part of a washing unit. The washing unit may comprise one or more washing baths, which typically contain sodium hydroxide and sodium carbonate in amounts that are approximately 1/3 of the amounts in the spin bath, and half of those in the stretching unit. Thus, the amount of sodium hydroxide in the washing unit is about 0.33-0.66 wt-% and the amount of sodium carbonate less than 10 wt-%, such as 7.3-9.9 wt-%. The weight percentages (wt-%) being calculated from the total weight of the washing bath. The amounts of sodium hydroxide and sodium carbonate are relatively small compared to spin bath and stretching bath.

Thus, in one embodiment sodium hydroxide and/or sodium carbonate, as well as zinc is preferably retrieved also from the solutions of the stretching unit and/or the washing unit and/or the alkali hydrolysis unit, and recycled similarly to the spin bath. Thus, the embodiment described in the present application also apply for recycling of the stretching and/or washing bath and/or alkali hydrolysis liquor. The method of the present invention preferably contains means for monitoring the pH and amounts of components of the various baths, as well as means for withdrawing and optionally returning the solutions to the units.

According to one embodiment, the withdrawn portion of the aqueous spin bath can be withdrawn from the spin bath in a spinning unit at any suitable location or at several different locations, such as from one or more points on the bottom of the spin bath or as an overflow of the spin bath. It is also possible to withdrawn a part of the spin bath from the spinning unit (i.e. the vessel used for spinning), or from the recycling conduit(s).

In one embodiment, the withdrawn portions are filtrated prior to recycling, in particular prior to the first evaporation step. There might be for example zinc containing particles crystallized in the spin bath.

In one embodiment, the actual recycling of the withdrawn portion of the spin bath comprises recovery, i.e. crystallization and separation, of the coagulation salt. Further, the recycling preferably comprises recovery of sodium hydroxide, wherein sodium hydroxide free of coagulation salt is obtained. Sodium hydroxide is preferably recovered as a chemically pure aqueous sodium hydroxide, and as a mother liquor of the withdrawn spin bath preferably further comprising zinc in a dissolved form. The mother liquor preferably having a sodium carbonate content of less than 1 wt.%, calculated from the total weight of the mother liquor. Further, nitrogenous compounds are preferably also recovered.

According to one embodiment, at least part of water and/or free ammonia present in the withdrawn portion of the aqueous spin bath is first evaporated, wherein water and/or free ammonia, in particular ammonia containing water, is preferably recovered from vacuum pump. In one embodiment, the temperature of the withdrawn aqueous spin bath, i.e. the temperature of the aqueous spin bath subjected for evaporation, has a temperature in the range of 35 to 80 °C, preferably 40 to 60 °C, more preferably in the range of 45 to 55 °C. In particular, the withdrawn spin bath is evaporated and consequently cooled in a flash unit. In particular, the temperature of the withdrawn spin bath decreases during flash unit due to evaporation of water and/or free ammonia in vacuum, thus active cooling is not necessary needed. The other option is to use evaporator, such mechanical vapor recompression, followed by active cooling. Preferably, the spin bath is cooled or it cools down (in a flash unit) to a temperature in the range of 25-75 °C, preferably in the range of 30-45 °C, such as to about 30 °C, depending on the temperature prior to evaporation. Evaporation and consequent cooling of the withdrawn portion of the spin bath facilitates following crystallization step of the coagulation salt. Water and/or free ammonia is preferably evaporated to an amount that still enables an equilibrium state of the withdrawn portion of the spin bath, i.e. state in which the coagulation salt does not yet crystalize.

Thus, in one embodiment, the method comprises evaporating at least part of water and/or free ammonia present in the withdrawn portion of the aqueous spin bath to obtain a concentrated aqueous spin bath.

In a preferred embodiment, the evaporation is performed with a flash evaporator.

According to one embodiment, the evaporation step comprising evaporating at least part of water and/or free ammonia is performed as a separate step. However, according to another embodiment, the evaporation step can also be performed in the context of the following crystallization step. In any case, evaporation is performed prior to actual crystallization.

Thus, next, the withdrawn portion of the aqueous spin bath as such or the already concentrated aqueous spin bath, i.e. the spin bath obtained after evaporation, is subjected to a first vacuum crystallization. A first part of the coagulation salt is recovered, i.e. crystallized and separated, by this method step. Separation of the formed crystals of the coagulation salt can be carried out by any known method, such as by centrifuge or filtration. In case of sodium carbonate, the coagulation salt is at least essentially crystallized as sodium carbonate decahydrate.

In one embodiment, the previous evaporation step can be performed as a first step of the first vacuum crystallization.

Vacuum crystallization is performed in a vacuum crystallizer. Vacuum crystallization is based on supersaturation obtained by adiabatic evaporative cooling. When the warm saturated solution is introduced into the crystallizer, due to high vacuum, the solution undergoes flashing. A part of the solvent gets evaporated, thereby causing cooling of the spin bath solution. From the resulting supersaturation, crystals are formed (or at least crystallization is initiated).

In one embodiment, the vacuum crystallization (the first and/or the second) is performed stepwise in several steps, such in 2 to 8 steps, preferably in 4 to 6 steps. In one embodiment, the stepwise vacuum crystallization comprises at least two, preferably 2 to 8, more preferably 3 to 7, such as 6, consecutive crystallization and separation steps. Thus, water evaporates gradually and temperature of the spin bath decreases, preferably steadily, during different steps due to occurring crystallization. Each step comprise recovery, i.e. crystallization and separation, of the formed crystals. Stepwise crystallization facilitates crystallization and subsequent recovery of the crystals since the spin bath subjected to crystallization comprises so much coagulation salt, typically sodium carbonate, that upon crystallization at once as a whole the spin bath solution becomes difficult to handle forming into a thick crystal slurry (i.e. porridge-like composition). Stepwise crystallization enables better control of the composition. Further, once the crystallization is performed gradually with decreasing temperature of the spin bath, the coagulation salt can be recovered as decahydrate in a controlled manner, and further, also the crystal size can be controlled.

In one embodiment, recovery of the coagulation salt in the form decahydrate crystals (Na₂CO₃ x 10 H₂O), in particular sodium carbonate decahydrate, is important. Decahydrate crystals are large enough in order to enable easy separation from the mother liquor. Thus, it is preferred to avoid formation of small sized sodium carbonate monohydrate and anhydrous sodium carbonate since these are significantly more difficult to separate, as they for example cause clogging of filters. Thus, vacuum crystallization conditions, such as temperature and concentration, are preferably maintained in a range in which decahydrates are formed. Even further, decahydrate is also easy to handle when the recovered coagulation salt is possibly re-dissolved before being returned to the spin bath.

According to one embodiment, the temperature of the concentrated aqueous spin bath subjected to the first vacuum crystallization has a temperature in the range of 25-75 °C, preferably in the range of 30-45 °C, such as about 30 °C. During the first vacuum crystallization the temperature of the aqueous spin bath decreases, preferably gradually decreases, to a temperature in the range of 2-15 °C , such as in the range of 5-10 °C. The first vacuum crystallization is preferably performed at a pressure of at least 100 kPa.

According to one embodiment, at least 80 wt.%, preferably at least 90 wt.%, more preferably at least 93 wt.% of sodium carbonate is crystallized and recovered by the first vacuum crystallization, calculated from the total weight of sodium carbonate in the withdrawn portion of the aqueous spin bath.

The remaining spin bath from the first vacuum crystallization is then concentrated by evaporation to obtain a further concentrated spin bath. In particular, the remaining spin bath is concentrated to a concentration that still enables an equilibrium state of the spin bath, i.e. state in which the coagulation salt does not yet crystallize. In one embodiment, the remaining spin bath is concentrated by evaporation with a mechanical vapor recompression evaporator, wherein water and/or free ammonia, in particular ammonia containing water, is preferably recovered from vacuum pump. While temperature increases, free ammonia is possible to recover along with water, and further, if the spin bath still contains small residues of urea and/or biuret or other nitrogenous compounds, those may be hydrolysed to form free ammonia and the formed free ammonia thereof can also be recovered at elevated temperatures. Thus, the present method also enables removal and further recycling of nitrogenous compounds.

In one embodiment, the further concentrated spin bath comprises water in an amount of up to 80 wt.%, such as up to 75 wt.%, for example 60 to 80 wt.%, calculated from the total weight of the further concentrated spin bath.

Next, the further concentrated spin bath is subjected to a second vacuum crystallization, wherein the remaining coagulation salt of the spin bath is preferably recovered, i.e. crystallized and separated. In particular, the further concentrated spin bath is subjected to a second vacuum crystallization to recover a second part of the sodium carbonate and to obtain a mother liquor of the spin bath.

The second vacuum crystallization works according to the same principles as the first vacuum crystallization. However, vacuum crystallization conditions can be adapted based on the composition subjected to second vacuum crystallization. The aim is to crystallize the coagulation salt as decahydrate crystals, similar to the first vacuum crystallization. Thus, vacuum crystallization conditions, such as temperature and concentration, are preferably maintained in a range in which decahydrates are formed. Separation of the formed crystals of the coagulation salt can be carried out by any known method, such as by centrifuge or filtration.

According to one embodiment, the further concentrated aqueous spin bath subjected to the second vacuum crystallization has a temperature in the range of 15 to 40 °C, preferably in the range of 20 to 30 °C, such as about 24 °C. During the second vacuum crystallization the temperature of the aqueous spin bath decreases to a temperature in the range of 5-15 °C. The second vacuum crystallization is preferably performed at a pressure of at least 75 kPa.

According to one embodiment, at least 80 wt.%, preferably at least 85 wt.%, more preferably at least 89 wt.% of the sodium carbonate still present in the spin bath prior to the second vacuum crystallization, i.e. in the further concentrated spin bath, is crystallized and separated by the second vacuum crystallization, calculated from the total weight of sodium carbonate in the further concentrated spin bath.

According to one embodiment, at least 90 wt.%, preferably at least 95 wt.%, more preferably at least 99 wt.%, most preferably all, of the sodium carbonate of the withdrawn spin bath is recovered, in particular as sodium carbonate decahydrates, by the combination of the first and the second vacuum crystallization.

At least part of the recovered sodium carbonate is returned back to the aqueous alkaline spin bath, which aqueous alkaline spin bath is further circulated to the spinning unit. In particular, the recovered sodium carbonate recovered as sodium carbonate decahydrates is dissolved and returned to the spin bath in a spin bath tank. The spin bath cycles between the spinning unit and the spin bath tank, and the composition of the spin bath is adjusted suitable for spinning of the cellulose carbamate dope in the spin bath tank by make-up solution and dissolved sodium carbonate feed.

Crystallization releases energy since during crystallization new bonds are formed, which releases an amount of energy. The energy released during the first and/or the second crystallization is preferably recycled back to the process of manufacture of cellulose carbamate textile fibre. In one embodiment, the energy released during the crystallization is re-used in re-dissolving the recovered coagulation salt prior to returning it to the aqueous alkaline spin bath.

According to one embodiment, the obtained mother liquor is subjected to further treatments prior to being recycled back to the manufacture process of cellulose carbamate textile fibre, in particular to the dissolution step of cellulose carbamate.

According to one embodiment, the method further comprises, preferably after the previous step, i.e. after the second vacuum crystallization, a step of subjecting the obtained mother liquor to ultrafiltration in order to recover possible polyethylene glycol (PEG) present in the spin bath.

Thus, in one embodiment, the method further comprises a step of subjecting the mother liquor to ultrafiltration to recover polyethylene glycol (PEG) from the mother liquor. Ultrafiltration enables recovering essentially all of the PEG present in the spin bath, in particular at least 90 wt.%, preferably at least 95 wt.%, of the PEG is recovered, calculated from the total weight of the PEG still present in the spin bath prior to ultrafiltration, i.e. in the mother liquor.

According to another embodiment, ultrafiltration is not used and PEG is remained in the mother liquor, wherein it can be recycled together with the aqueous sodium hydroxide solution to the dissolution of cellulose carbamate, for example. In one embodiment, PEG is not recovered if it is anyway used as an auxiliary agent in the spinning process, and the mother liquor is still processable with PEG in the liquor, wherein it can be recycled along the mother liquor through the production of cellulose carbamate spinning dope to the spin bath in the spinning unit. However, in a preferred embodiment, PEG is recovered as described above.

According to a further embodiment, the method further comprises, after the optional ultrafiltration, a step of subjecting the recovered PEG to diafiltration. Diafiltration is used to wash the PEG in order to avoid migration of sodium carbonate with PEG. Water or dilute sodium hydroxide solution is typically used as a washing solution in the diafiltration. Purified PEG is preferably recycled to a dissolution step of cellulose carbamate of the manufacture process of cellulose carbamate textile fibre.

According to one embodiment, the method further comprises, preferably after the previous step, i.e. at least after the second vacuum crystallization, preferably after the ultrafiltration or ultrafiltration coupled with diafiltration, a step of subjecting the mother liquor to nanofiltration. Nanofiltration enables recovery of chemically pure sodium hydroxide, and further, it significantly decreases volume of the mother liquor, which is especially beneficial for an optionally following evaporation crystallization step. Chemically pure sodium hydroxide refers to an aqueous sodium hydroxide solution comprising less than 1 wt.%, in particular less than 0.5 wt.%, of other components than sodium hydroxide and water. In particular, chemically pure sodium hydroxide solution is (at least essentially) free of sodium carbonate, however, it may comprise small residual amounts of nitrogenous compounds.

In one embodiment, at least 50 wt.%, preferably at least 60 wt.%, of sodium hydroxide present in the mother liquor can be recovered by nanofiltration, calculated from the total weight of the mother liquor.

Thus, in one embodiment, the method further comprises, preferably after the ultrafiltration or ultrafiltration coupled with diafiltration, a step of subjecting the mother liquor to nanofiltration to recover chemically pure sodium hydroxide.

In one embodiment, after the nanofiltration, the mother liquor typically has a water content of up to 75 wt.%, preferably up to 70 wt.%, calculated from the total weight of the mother liquor.

According to one embodiment, the recovered chemically pure sodium hydroxide is recycled to a dissolution step of cellulose carbamate of the manufacture process of cellulose carbamate textile fibre.

Thus, according to one embodiment, the mother liquor can be subjected to one or more of ultrafiltration, diafiltration and nanofiltration. In a preferred embodiment, the mother liquor is subjected to ultrafiltration, diafiltration and nanofiltration in this precise order. In another embodiment, the mother liquor is only subjected to one of these filtration steps, such as only for nanofiltration.

In a preferred embodiment, the filtration steps, i.e. ultrafiltration, diafiltration and nanofiltration, or ultrafiltration and nanofiltration, are performed one after the other, wherein filtration occurs only in one stage of the recycling process. However, according to another embodiment, ultrafiltration and/or diafiltration can already be performed at an earlier stage of the process, i.e. after the first vacuum crystallization, whereas nanofiltration would still be performed after the second vacuum crystallization.

According to one embodiment, the mother liquor is subjected to evaporation crystallization. The mother liquor obtained from the second vacuum crystallization can be subjected only to evaporation crystallization. However, in a preferred embodiment, the mother liquor is subjected to evaporation crystallization after one or more of the described filtration steps.

Thus, in one embodiment, the method further comprises, preferably after ultrafiltration, diafiltration and/or nanofiltration, a step of subjecting the mother liquor to an evaporation crystallization to crystallize remaining sodium carbonate, preferably at least essentially all of the remaining sodium carbonate. In particular, sodium carbonate is crystallized as sodium carbonate monohydrate (Na₂CO₃*1H₂O). Water is evaporated during evaporation crystallization, wherein sodium hydroxide concentration of the mother liquor increases, which, in turn, results in crystallization of sodium carbonate because sodium carbonate is a sparingly soluble in concentrated solutions of sodium hydroxide. At the same time, increasing sodium hydroxide concentration further facilitates solubility of zinc. Thus, evaporation crystallization enables recovery of essentially all of the possibly remaining sodium carbonate from the mother liquor, wherein mother liquor comprising an aqueous sodium hydroxide solution comprising dissolved zinc compound is obtained.

According to one embodiment, the sodium carbonate monohydrate crystals are recycled back to one of the previous step of the method in order to re-crystallize sodium carbonate as decahydrate, wherein it can be more easily recovered and recycled. In one particular embodiment, the sodium carbonate monohydrate is dissolved and recycled to the remaining spin bath obtained from the first vacuum crystallization. Thus, sodium carbonate would dissolve in the remaining spin bath and could crystallize as decahydrate in the second vacuum crystallization step.

According to one embodiment, the mother liquor is recycled to a dissolution step of cellulose carbamate of the manufacture process of cellulose carbamate textile fibre. It is preferred that the mother liquor comprises sodium hydroxide and dissolved zinc compound.

In a preferred embodiment, the mother liquor comprises, in particular after the selected treatment steps, up to 1 wt.%, preferably up to 0.5 wt.%, of sodium carbonate, calculated from the total weight of the final mother liquor.

In one embodiment, the mother liquor, in particular after the selected treatment steps, comprises 40-70 wt.% of water, 20-40 wt.% of sodium hydroxide and 5-25 wt.% of sodium zincate, calculated from the total weight of the mother liquor. Sodium zincate refers to anionic hydroxides having a chemical formula of Na₂Zn(OH)₄.

Thus, typically the sodium hydroxide, either as recovered chemically pure sodium hydroxide or as being part of the mother liquor, is recycled to a dissolution step of cellulose carbamate of the manufacture process of cellulose carbamate textile fibre. In one particular embodiment, the recovered chemically pure sodium hydroxide can be recycled to be used to dissolve fresh feed of zinc (in the form of zinc oxide and/or zinc hydroxide) in order to provide a zincate solution for dissolution of cellulose carbamate.

According to one embodiment, sodium hydroxide is recycled to alkaline after-treatment steps of formed fibres, such in optional post-hydrolysis of carbamate groups by hot alkaline (sodium carbonate/sodium hydroxide containing) liquor or in an alkaline bleaching step.

At least part of the coagulation salt recovered during the recycling process is returned back to the spin bath, in particular to the spin bath in a spin bath tank. Preferably, the returned coagulation salt is at least essentially free of sodium hydroxide and zinc. In one embodiment, small amounts of sodium hydroxide and/ or zinc may remain with the recovered coagulation salt, typically depending on how dry the coagulation salt crystals are spun (or washed). In one embodiment, the sodium hydroxide content of the recovered coagulation salt is preferably less than 0.02 wt.% calculated from the total weight of the recovered coagulation salt. In one embodiment, the zinc content of the recovered coagulation salt is less than 0.001 wt.% calculated from the total weight of the recovered coagulation salt. Low sodium hydroxide content of the returned coagulation salt is preferred, since preferably sodium hydroxide mainly enters the spin bath along with the (cellulose carbamate) spinning dope.

In one embodiment, the sodium hydroxide content of the spin bath returned from the spin bath tank to the spinning unit is preferably up to 2 wt.%, such as 0.2-1.9 wt- %, i.e. lower than the maximum sodium hydroxide content of the spin bath.

According to one embodiment, sodium carbonate is at least essentially recovered and recycled as sodium carbonate decahydrate, preferably at least 98 wt.% of the sodium carbonate is recovered as decahydrate, more preferably at least 99 wt.%, most preferably 100 wt.%, calculated from the total weight of the recovered sodium carbonate.

According to one embodiment, up to 2 wt.%, preferably up to 1 wt.%, of sodium carbonate is crystallized as sodium carbonate monohydrate, calculated from the total weight of the sodium carbonate present in the withdrawn aqueous spin bath.

In one embodiment, the different components of the spin bath can also be all separated from one another, and re-used in the process, either in the dissolution unit or in the spinning unit. Thus, according to one embodiment, also zinc can be recovered from the spin bath as such in a separate zinc removal step. In one embodiment, zinc can be removed from spin bath by filtration of undissolved precipitated zinc oxide, zinc hydroxide and/or zinc carbonate.

The present invention also relates to a method for manufacture of cellulose carbamate textile fibre, comprising the steps of dissolving cellulose carbamate in an aqueous sodium hydroxide medium to form a cellulose carbamate spinning dope, wherein the cellulose carbamate spinning dope comprises zinc, spinning the cellulose carbamate spinning dope into an aqueous alkaline spin bath in a spinning unit, to form filaments or filament tow, stretching the filaments or filament tow to obtain stretched cellulose carbamate fibres, and withdrawing a portion of the alkaline spin bath from the spinning unit for recycling, especially for recycling according to recycling method of the present invention. The terms "spinning the cellulose carbamate spinning dope into an aqueous alkaline spin bath" as used herein and hereafter may also refer to "feeding a cellulose carbamate spinning dope into an aqueous alkaline spin bath". Additionally, or alternatively, the aqueous alkaline spin bath comprises sodium carbonate as an alkaline coagulation salt, aqueous sodium hydroxide, zinc, free ammonia and other nitrogenous compounds.

According to one embodiment, the method further comprises the step of withdrawing a portion of the stretching, washing and/or alkali hydrolysis liquor units for recycling.

In further embodiment, the present invention relates to a method for the manufacture of cellulose carbamate textile fibre, comprising the step of
- dissolving cellulose carbamate having a maximum nitrogen content of 2.5 wt-% in an aqueous sodium hydroxide medium to form a cellulose carbamate spinning dope, wherein the cellulose carbamate spinning dope comprises zinc;
- spinning the cellulose carbamate spinning dope into an aqueous alkaline spin bath in a spinning unit, to form filaments or filament tow, wherein a temperature of the aqueous alkaline spin bath is in the range of 40 -70 °C; and
- stretching the filaments or filament tow to obtain cellulose carbamate fibres; wherein a sodium hydroxide content of the spin bath is maintained within a range of 1.0-1.99 wt-% and a sodium carbonate content of the spin bath is maintained at most 30 wt-%, by withdrawing a portion of the alkaline spin bath from the spinning unit for recycling, especially for recycling according to the recycling method of the present invention.

According to one embodiment, in the spin bath cellulose carbamate is coagulated into cellulose carbamate filaments, preferably through one or more spinnerets. Such filaments are recovered from the spin bath and subjected to stretching, optional cutting into staple fibres, and optional after-treatment in which the filaments or staple fibres are alkali hydrolysed, (acid) washed, bleached and/or spin finished.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### DETAILED DESCRIPTION OF THE DRAWING

Figure 1 schematically illustrates a method according to an embodiment. Cellulose carbamate 1 is fed to a cellulose carbamate dissolution unit 2. In this embodiment, the amount of cellulose carbamate is 8-11 wt-%, sodium hydroxide 5-7 wt-% and zinc 0.16-1.2 wt-%, the rest comprising water, nitrogenous compounds and spinning dope activator. From the dissolution unit the dissolved cellulose carbamate in the form of cellulose carbamate spinning dope is directed to a spin bath in spinning unit 3 by extruding via spinneret(s). In the spin bath in the spinning unit, the amount of sodium hydroxide is maintained within a range of 1.0-1.99 wt-%, and the amount of sodium carbonate (Na₂CO₃) within a range of 22-30 wt-%. The composition of the spin bath in the spinning unit 3 is controlled by spin bath cycle between the spinning unit 3 and spin bath tank 9. The composition of the spin bath is adjusted in the spin bath tank 9 by make-up solution and dissolved sodium carbonate feed 19, and the spin bath can be filtrated prior cycling it back to the spinning unit. The spun filaments or fibres are then passed to one or more stretching baths in stretching unit 4. In the stretching unit, the amounts of sodium hydroxide and sodium carbonate are kept at levels that are about 2/3 of the amounts in the spin bath.

After stretching, the fibres or filaments are washed in a washing unit 5 ( in one or more washing baths), wherein the amounts of sodium hydroxide and sodium carbonate are kept at levels that are about 1/3 of the amounts in the spin bath. After washing, the fibres or filaments are cut in a cutting unit 6 and optionally after-treated in one or more after-treatment units 7. Fibres or filaments 8 are obtained. Possible after-treatments may comprise one or more of alkaline washing, washing with water, acid washing, alkaline hydrolysis, alkaline bleaching, spin finishing treatment and drying. Typically, the after-treatment comprises at least washing of the fibres or filaments with water, spin finishing treatment and drying. The other treatments are more optional and depend for example on the upstream process condition and/or intended use of the material.

The Figure further shows the method of recycling the aqueous spin bath according to an embodiment. Indeed, a portion of the aqueous spin bath is withdrawn from the spinning unit 3 for recycling, and similarly, a portion of the stretching bath is withdrawn from the stretching unit 4 for recycling. First, the withdrawn portions are subjected to evaporation in a first evaporation unit 10. The withdrawn portions may be combined before the evaporation unit. At least part of water and/or free ammonia is evaporated in the evaporation unit to obtain a concentrated spin bath. The concentrated spin bath is subjected to vacuum crystallization in a first vacuum crystallization unit 11, wherein sodium carbonate decahydrates 17 are recovered. The sodium carbonate decahydrates 17 are dissolved in a sodium carbonate dissolution unit 18, wherein the obtained dissolved sodium carbonate 19 is returned to the spin bath in the spin bath tank 9, and further returned to the spin bath in the spinning unit 3. The remaining spin bath from the first vacuum crystallization is then subjected to further evaporation in a second evaporation unit 12 to obtain a further concentrated spin bath which is then subjected to vacuum crystallization in a second vacuum crystallization unit 13. Similarly to the first vacuum crystallization, sodium carbonate decahydrates 17 are recovered, dissolved in the sodium carbonate dissolution unit 18 into dissolved sodium carbonate 19 and returned to the spin bath in the spin bath tank 9, and further to the spinning unit 3.

The remaining spin bath from the second vacuum crystallization, called mother liquor, is subjected to ultrafiltration in an ultrafiltration unit 14, wherein PEG 20 can be recovered, and recycled to the dissolution unit 2. Next, the mother liquor is subjected to nanofiltration in a nanofiltration unit 15. Pure sodium hydroxide solution 21 is recovered from nanofiltration, which sodium hydroxide is recycled to the carbamate dissolution in the dissolving unit 2. In addition/ optionally, the recovered pure sodium hydroxide solution 21 can also be recycled to after-treatment unit(s) 7.

Finally, the remaining mother liquor from nanofiltration 15 is subjected to evaporation crystallization in an evaporation crystallization unit 16. Sodium carbonate monohydrates 22 are recovered from the evaporation crystallization, and those can be recycled back to the crystallization, in particular the monohydrates are recycled to the remaining spin bath after the first vacuum crystallization, i.e. to the spin bath after the first vacuum crystallization unit 11 and before the second evaporation unit 12, wherein those can re-crystallize as decahydrate in the second vacuum crystallization unit. The remaining mother liquor 23 from the evaporation crystallization 16 comprises an aqueous sodium hydroxide solution including dissolved zinc compound, which mother liquor is recycled to the dissolving unit 2. Such mother liquor 23 can be used to dissolve cellulose carbamate as such, since the mother liquor already comprise zinc in dissolved form. Additionally, or alternatively, the remaining spin bath after the first vacuum crystallization, i.e., the spin bath after the first vacuum crystallization unit 11 may be subjected to ultrafiltration in a second ultrafiltration unit 14b (not shown) located between the first vacuum crystallization unit 11 and the second evaporation unit 12. Sodium carbonate monohydrates 22 may be optionally recycled back to the mother liquor from the second ultrafiltration unit 14b, i.e., recycled to the remaining mother liquor after ultrafiltration in the second ultrafiltration unit 14b. PEG 20 may be recovered from the ultrafiltration in the ultrafiltration unit 14b, and recycled to the dissolution unit 2. The remaining mother liquor (comprising optional sodium carbonate monohydrates 22) from the ultrafiltration in the second ultrafiltration unit 14b is then subjected to further evaporation in the second evaporation unit 12.

### INDUSTRIAL APPLICABILITY

At least some embodiments of the present invention find industrial application in the context of producing cellulose filaments or fibres.

### LIST OF REFERENCE SIGNS

### Reference Numbers

- *1*: *cellulose carbamate*
- *2*: *cellulose carbamate dissolution unit*
- *3*: *spinning unit*
- *4*: *stretching unit*
- *5*: *washing unit*
- *6*: *cutting unit*
- *7*: *after-treatment unit(s)*
- *8*: *fibres or filaments*
- *9*: *spin bath tank*
- *10*: *first evaporation unit*
- *11*: *first vacuum crystallization unit*
- *12*: *second evaporation unit*
- *13*: *second vacuum crystallization unit*
- *14*: *ultrafiltration*
- *15*: *nanofiltration*
- *16*: *evaporation crystallization*
- *17*: *sodium carbonate decahydrates*
- *18*: *sodium carbonate dissolution unit*
- *19*: *dissolved sodium carbonate*
- *20*: *PEG*
- *21*: *pure sodium hydroxide solution*
- *22*: *sodium carbonate monohydrates*
- *23*: *mother liquor*

### EXAMPLES

Reference will now be made in detail to various embodiments. The following specific non-limiting examples will further identify the method of recycling an aqueous alkaline spin bath used in manufacture of cellulose carbamate textile fibre as disclosed herein and hereafter.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

### Example 1

A portion of an aqueous alkaline spin bath in equilibrium state was withdrawn from the spinning unit, the aqueous alkaline spin bath containing 1.8 wt-% of sodium hydroxide, 26.4 wt-% of sodium carbonate, 0.18 wt-% of zinc, 0.02 wt-% polyethylene glycol (spinning dope activator), 0.07 wt-% ammonia, 0.015 wt-% urea and 0.0001 wt-% biuret residue. The spin bath solution (ρ= 1.304 g/cm³, T = 44 °C) was heated and water was removed by thermal evaporation at 78 °C. The evaporation resulted in a concentrated aqueous spin bath that was used for the first vacuum crystallization. The solution (the concentrated aqueous spin bath) was cooled down to 30 °C and Na₂CO₃•10 H₂O was added to the solution as crystallization seeds. Onset temperature of the exothermic crystallization of the first step of the stepwise crystallization was 28.8 °C. The resulting suspension was filtrated in a vacuum filtration set-up at T = 28 °C, and the resulted filter cake was centrifuged in order to remove most of the residual mother liquor. In the second step of the first vacuum crystallization, cooling of a solution obtained by combining the filtrate and the residual mother liquor was continued until a temperature of 20.8 °C was reached and filtration was carried out. The resulted filtrate was further cooled down to 7 °C, which was subsequently filtrated in a vacuum filtration (pₘᵢₙ= 102 kPa), yielding a filtrate and a filter cake. This filtrate of the first vacuum crystallization contained 4.8 wt-% of sodium hydroxide and 6.6 wt-% of sodium carbonate. Based on the water content of the filter cake and measuring the mass loss (63.0 wt-%), there are 10.02 H₂O molecules per Na₂CO₃ in the sample, indicating that virtually pure Na₂CO₃ decahydrate was obtained.

Next, the filtrate was subjected to ultrafiltration (1000 Da) to recover polyethylene glycol present in the mother liquor. The remaining filtrate was concentrated by evaporation (100 °C). Without being limited to any particular theory or mechanism, it is believed that the residues of the nitrogenous compound were hydrolyzed in the thermal treatment as there were not notable nitrogen detected in the solution after the evaporation (total nitrogen measured according to Finnish Standards Association (SFS) 5505:1988).

The resulting solution was the start solution (the further concentrated spin bath) for the second vacuum crystallization. The second crystallization was also performed stepwise (2 steps). The solution was cooled until a temperature increase indicated the onset of the exothermic crystallization at 20.1 °C. The solution was filtrated and cooling of the filtrate was continued until a temperature of 10.9 °C was reached. The remaining suspension was filtrated in a vacuum filtration (pₘᵢₙ= 79 kPa) yielding a filtrate and a filter cake. The filtrate of the second vacuum crystallization contained 16.2 wt-% of sodium hydroxide and 2.6 wt-% of sodium carbonate. An almost pure Na₂CO₃ decahydrate was recovered, containing only a small amount of mother liquor. The particle size of the Na₂CO₃ decahydrate crystals was measured by laser diffraction, Dᵥ(50) of the crystals was 690 µm. The remaining mother liquor was concentrated by nanofiltration (100 Da) to separate sodium hydroxide filtrate.

The nanofiltrated concentrate was subjected to evaporation crystallization. The solution was heated under vacuum (p = 50 kPa) and water was evaporated at temperatures between 90 °C and 100 °C. The resulting suspension was cooled down and vacuum filtrated at 50 °C. The separated solid contained 9.8 wt-% H₂O, giving a formula of approximately Na₂CO₃•0.64H₂O indicating a mixture of monohydrate and anhydrate of Na₂CO₃. The filtrate of the evaporation crystallization contained 32.5 wt-% of sodium hydroxide, 5.6 wt-% zinc and 0.7 wt-% of sodium carbonate.

### Example 2

The resulted filtrate of the evaporation crystallization comprising sodium hydroxide and zinc (i.e., containing sodium hydroxide zincate) from example 1 was recycled back to cellulose carbamate dissolution stage. Before being recycled back to cellulose carbamate dissolution stage, the filtrate was diluted with water to obtain a suitable zincate solution to dissolve cellulose carbamate. The cellulose carbamate used was from a carbamation process of recycled cotton (EP4021946B1) and the cellulose carbamate was dissolved into the recycled and diluted filtrate containing sodium hydroxide zincate to form the cellulose carbamate spinning dope for production of cellulose carbamate fibres by the wet spinning process. The ground air dry cellulose carbamate powder was dispersed and dissolved in recycled and diluted 6.5 wt-% sodium hydroxide and 1.2 wt-% sodium zincate solution. Cellulose carbamate content in the spinning dope was 8.1 wt-%. The cellulose carbamate spinning dope obtained from the dissolving process was subsequently successfully filtered using filtering process using a 20 µm filter media in the second filtration stage. The wet spinning of the filtered and deaerated cellulose carbamate spinning dopes were carried out using the aqueous alkaline spin bath. The cellulose carbamate spinning dope was coagulated in the aqueous alkaline spin bath having a temperature of 45 °C and the applied total godet stretching stress was 90 % under hot bath of a temperature of 90 °C. The filament tow obtained from spinning was cut into staple fibres with cut length of 40 mm. Linear density of the fibres was 1.34 dtex, fibre tenacity was 2.1 cN/dtex and elongation was 8.8 %. Measured according to ISO 1973:2021 and ISO 5079:2020. The dried fibres were conditioned at a relative humidity of 65 ± 2 % and temperature of 20 ± 2 °C for at least 24 h. The test speed was 20 mm/min and gauge length 20 mm, an average of 20 measurements (Favigraph, Textechno).

## Claims

1. Method of recycling an aqueous alkaline spin bath used in manufacture of cellulose carbamate textile fibre, comprising the steps of
- feeding a cellulose carbamate spinning dope into an aqueous alkaline spin bath in a spinning unit, wherein the aqueous alkaline spin bath comprises sodium carbonate as an alkaline coagulation salt, aqueous sodium hydroxide, zinc, free ammonia and other nitrogenous compounds,
- withdrawing a portion of the aqueous alkaline spin bath,
- evaporating at least part of water and free ammonia present in the withdrawn portion of the aqueous spin bath to obtain a concentrated aqueous spin bath,
- subjecting the concentrated aqueous spin bath to a first vacuum crystallization to recover a first part of the sodium carbonate and obtain a remaining spin bath,
- concentrating the remaining spin bath by evaporation to obtain a further concentrated spin bath,
- subjecting the further concentrated spin bath to a second vacuum crystallization to recover a second part of the sodium carbonate and to obtain a mother liquor of the spin bath, and
- returning at least part of the recovered sodium carbonate back to the aqueous alkaline spin bath.

2. The method according to any of the preceding claims, wherein the cellulose carbamate spinning dope is provided by dissolution of cellulose carbamate in an aqueous sodium hydroxide medium, wherein the cellulose carbamate spinning dope comprises dissolved zinc compound.

3. The method according to any of the preceding claims, wherein the withdrawn portion of the aqueous alkaline spin bath of cellulose carbamate spinning dope comprises 1.0 to 1.99 wt.% of sodium hydroxide and 22 to 30 wt.% of sodium carbonate, calculated from the total weight of the aqueous alkaline spin bath.

4. The method according to any of the preceding claims, wherein the concentrated aqueous spin bath subjected to the first vacuum crystallization has a temperature in the range of 25-75 °C, preferably in the range of 30-45 °C, such as about 30 °C, preferably at a pressure of at least 100 kPa.

5. The method according to any of the preceding claims, wherein the further concentrated aqueous spin bath subjected to the second vacuum crystallization has a temperature in the range of 15 to 40 °C, preferably at 20 to 30 °C, such as 24 °C, preferably at a pressure of at least 75 kPa.

6. The method according to any of the preceding claims, wherein the first and/or the second vacuum crystallization is performed as a stepwise crystallization comprising at least two, preferably 2 to 8, more preferably 3 to 7, such as 6, consecutive recovery, i.e. crystallization and separation, steps.

7. The method according to any of the preceding claims, wherein energy released during the first and/or the second vacuum crystallization is recycled back to the process, in particular the released energy released during crystallization(s) is re-used in re-dissolving the recovered coagulation salt prior to returning it to the aqueous alkaline spin bath of the spinning unit.

8. The method according to any of the preceding claims, wherein the remaining spin bath from the first vacuum crystallization is concentrated with a mechanical vapor recompression evaporator.

9. The method according to any of the preceding claims, further comprising a step of subjecting the mother liquor to ultrafiltration to recover polyethylene glycol (PEG) from the mother liquor, wherein the recovered PEG is preferably recycled to a dissolution step of cellulose carbamate of the manufacture process of cellulose carbamate textile fibre, in particular to the dissolution step of cellulose carbamate according to claim 2, as a spinning dope activator.

10. The method according to claim 9, further comprising, after the ultrafiltration, a step of subjecting the recovered PEG to diafiltration.

11. The method according to any of the preceding claims, wherein the method further comprises, preferably after the ultrafiltration or ultrafiltration coupled with diafiltration, a step of subjecting the mother liquor to nanofiltration to recover chemically pure sodium hydroxide, wherein the chemically pure sodium hydroxide is preferably recycled to a dissolution step of cellulose carbamate of the manufacture process of cellulose carbamate textile fibre, in particular to the dissolution step of cellulose carbamate according to claim 2.

12. The method according to any of the preceding claims, wherein the method further comprises, preferably after the ultrafiltration, diafiltration and/or nanofiltration, a step of subjecting the mother liquor to an evaporation crystallization to recover sodium carbonate as monohydrate, wherein the remaining mother liquor comprises sodium hydroxide and dissolved zinc compound.

13. The method according to any of the preceding claims, wherein the mother liquor, preferably comprising sodium hydroxide and dissolved zinc compound, is recycled to a dissolution step of cellulose carbamate of the manufacture process of cellulose carbamate textile fibre, in particular to the step of dissolving cellulose carbamate according to claim 2.

14. The method according to any of the preceding claims, wherein the mother liquor comprises, in particular after one or more of ultrafiltration, diafiltration, nanofiltration and evaporation crystallization, at most 1 wt.% of sodium carbonate, preferably at most 0.5 wt.% of sodium carbonate, and 40-70 wt.% of water, 20-40 wt.% of sodium hydroxide and 5-25 wt.% of sodium zincate, calculated from the total weight of the mother liquor.

15. The method according to any of the preceding claims, wherein the sodium carbonate is at least essentially recovered as sodium carbonate decahydrate, preferably at least 98 wt.% of the sodium carbonate is recovered as decahydrate, more preferably at least 99 wt.%, most preferably 100 wt.%, calculated from the total weight of the recovered sodium carbonate.

16. The method according to any of the preceding claims, wherein at least 90 wt.%, preferably at least 95 wt.%, more preferably at least 99 wt.%, of the sodium carbonate of the withdrawn portion of the spin bath is recovered by the first and the second vacuum crystallizations.

17. A method for manufacture of cellulose carbamate textile fibre, comprising the steps of
- dissolving cellulose carbamate in an aqueous sodium hydroxide medium to form a cellulose carbamate spinning dope, wherein the cellulose carbamate spinning dope comprises zinc,
- spinning the cellulose carbamate spinning dope into an aqueous alkaline spin bath in a spinning unit, wherein the aqueous alkaline spin bath comprises sodium carbonate as an alkaline coagulation salt, aqueous sodium hydroxide, zinc, free ammonia and other nitrogenous compounds, to form filaments or filament tow,
- stretching the filaments or filament tow to obtain stretched cellulose carbamate fibres, and
- withdrawing a portion of the alkaline spin bath from the spinning unit for recycling according to the recycling method as defined in any of the preceding claims.

## Patentansprüche

1. Verfahren zur Wiederverwendung eines wässrigen alkalischen Spinnbades, das bei der Herstellung von Cellulosecarbamat-Textilfasern verwendet wird, umfassend die Schritte zum
- Zuführen einer Cellulosecarbamat-Spinnlösung in ein wässriges alkalisches Spinnbad in einer Spinneinheit, wobei das wässrige alkalische Spinnbad Natriumcarbonat als alkalisches Koagulationssalz, wässriges Natriumhydroxid, Zink, freies Ammoniak und andere stickstoffhaltige Verbindungen umfasst,
- Entnehmen eines Abschnitts des wässrigen alkalischen Spinnbades,
- Verdampfen mindestens eines Teils von Wasser und freiem Ammoniak, das in dem entnommenen Abschnitt des wässrigen Spinnbades vorhanden ist, um ein konzentriertes wässriges Spinnbad zu erhalten,
- Unterziehen des konzentrierten wässrigen Spinnbades einer ersten Vakuumkristallisation, um einen ersten Teil des Natriumcarbonats zurückzugewinnen und ein verbleibendes Spinnbad zu erhalten,
- Konzentrieren des verbleibenden Spinnbades durch Verdampfen, um ein weiteres konzentriertes Spinnbad zu erhalten,
- Unterziehen des weiter konzentrierten Spinnbades einer zweiten Vakuumkristallisation, um einen zweiten Teil des Natriumcarbonats zurückzugewinnen und um eine Mutterlauge des Spinnbades zu erhalten, und
- Zurückführen mindestens eines Teils des zurückgewonnenen Natriumcarbonats in das wässrige alkalische Spinnbad.

2. Verfahren nach einem der vorstehenden Ansprüche, wobei die Cellulosecarbamat-Spinnlösung durch Auflösen von Cellulosecarbamat in einem wässrigen Natriumhydroxidmedium bereitgestellt wird und die Cellulosecarbamat-Spinnlösung eine gelöste Zinkverbindung umfasst.

3. Verfahren nach einem der vorstehenden Ansprüche, wobei der entnommene Abschnitt des wässrigen alkalischen Spinnbades der Cellulosecarbamat-Spinnlösung 1,0 bis 1,99 Gew.-% Natriumhydroxid und 22 bis 30 Gew.-% Natriumcarbonat umfasst, berechnet vom Gesamtgewicht des wässrigen alkalischen Spinnbades,.

4. Verfahren nach einem der vorstehenden Ansprüche, wobei das konzentrierte wässrige Spinnbad, das der ersten Vakuumkristallisation unterzogen wird, eine Temperatur im Bereich von 25-75 °C, bevorzugt im Bereich von 30-45 °C, wie beispielsweise etwa 30 °C aufweist und bevorzugt bei einem Druck von mindestens 100 kPa liegt.

5. Verfahren nach einem der vorstehenden Ansprüche, wobei das weitere konzentrierte wässrige Spinnbad, das der zweiten Vakuumkristallisation unterzogen wird, eine Temperatur im Bereich von 15 bis 40 °C, bevorzugt bei 20 bis 30 °C, wie beispielsweise 24 °C aufweist und bevorzugt bei einem Druck von mindestens 75 kPa liegt.

6. Verfahren nach einem der vorstehenden Ansprüche, wobei die erste und/oder die zweite Vakuumkristallisation als stufenweise Kristallisation durchgeführt wird, die mindestens zwei, bevorzugt 2 bis 8, bevorzugter 3 bis 7, wie beispielsweise 6, aufeinanderfolgende Rückgewinnungs-, d. h. Kristallisations- und Trennschritte umfasst.

7. Verfahren nach einem der vorstehenden Ansprüche, wobei Energie, die während der ersten und/oder der zweiten Vakuumkristallisation freigesetzt wird, in den Prozess zurück wiederverwendet wird, insbesondere die bei Kristallisation(en) freigesetzte Energie wiederverwendet wird, um das zurückgewonnene Koagulationssalz erneut aufzulösen, bevor es in das wässrige alkalische Spinnbad der Spinneinheit zurückgeführt wird.

8. Verfahren nach einem der vorstehenden Ansprüche, wobei das verbleibende Spinnbad aus der ersten Vakuumkristallisation mit einem mechanischen Dampfkompressionsverdampfer konzentriert wird.

9. Verfahren nach einem der vorstehenden Ansprüche, weiter umfassend einen Schritt zum Unterziehen der Mutterlauge einer Ultrafiltration, um Polyethylenglykol (PEG) aus der Mutterlauge zurückzugewinnen, wobei das zurückgewonnene PEG bevorzugt in einen Auflösungsschritt von Cellulosecarbamat des Herstellungsprozesses von Cellulosecarbamat-Textilfasern, insbesondere in den Auflösungsschritt von Cellulosecarbamat nach Anspruch 2, als Spinnlösungsaktivator wiederverwendet wird.

10. Verfahren nach Anspruch 9, weiter umfassend einen Schritt zum Unterziehen des zurückgewonnenen PEG einer Diafiltration nach der Ultrafiltration.

11. Verfahren nach einem der vorstehenden Ansprüche, wobei das Verfahren weiter, bevorzugt nach der Ultrafiltration oder Ultrafiltration gekoppelt mit Diafiltration, einen Schritt des Unterziehens der Mutterlauge einer Nanofiltration umfasst, um chemisch reines Natriumhydroxid zurückzugewinnen, wobei das chemisch reine Natriumhydroxid bevorzugt in einen Auflösungsschritt von Cellulosecarbamat des Herstellungsprozesses von Cellulosecarbamat-Textilfasern, insbesondere in den Auflösungsschritt von Cellulosecarbamat nach Anspruch 2, wiederverwendet wird.

12. Verfahren nach einem der vorstehenden Ansprüche, wobei das Verfahren weiter, bevorzugt nach der Ultrafiltration, Diafiltration und/oder Nanofiltration, einen Schritt des Unterziehens der Mutterlauge einer Verdampfungskristallisation umfasst, um Natriumcarbonat als Monohydrat zurückzugewinnen, wobei die verbleibende Mutterlauge Natriumhydroxid und eine gelöste Zinkverbindung umfasst.

13. Verfahren nach einem der vorstehenden Ansprüche, wobei die Mutterlauge, die bevorzugt Natriumhydroxid und eine gelöste Zinkverbindung umfasst, in einen Auflösungsschritt von Cellulosecarbamat des Herstellungsprozesses von Cellulosecarbamat-Textilfasern, insbesondere in den Auflösungsschritt von Cellulosecarbamat nach Anspruch 2, wiederverwendet wird.

14. Verfahren nach einem der vorstehenden Ansprüche, wobei die Mutterlauge insbesondere nach einer oder mehreren von Ultrafiltration, Diafiltration, Nanofiltration und Verdampfungskristallisation, höchstens 1 Gew.-% Natriumcarbonat, bevorzugt höchstens 0,5 Gew.-% Natriumcarbonat, 40-70 Gew.-% Wasser, 20-40 Gew.-% Natriumhydroxid und 5-25 Gew.-% Natriumzinkat umfasst, aus dem Gesamtgewicht der Mutterlauge berechnet.

15. Verfahren nach einem der vorstehenden Ansprüche, wobei das Natriumcarbonat mindestens im Wesentlichen als Natriumcarbonat-Decahydrat zurückgewonnen wird, bevorzugt mindestens 98 Gew.-% des Natriumcarbonats als Decahydrat zurückgewonnen wird, bevorzugter mindestens 99 Gew.-%, besonders bevorzugt 100 Gew.-%, aus dem Gesamtgewicht des zurückgewonnenen Natriumcarbonats berechnet.

16. Verfahren nach einem der vorstehenden Ansprüche, wobei mindestens 90 Gew.- %, bevorzugt mindestens 95 Gew.-%, bevorzugter mindestens 99 Gew.-% des Natriumcarbonats des entnommenen Abschnitts des Spinnbades durch die erste und die zweite Vakuumkristallisation zurückgewonnen wird.

17. Verfahren zur Herstellung von Cellulosecarbamat-Textilfasern, umfassend die Schritte zum
- Auflösen von Cellulosecarbamat in einem wässrigen Natriumhydroxidmedium, um eine Cellulosecarbamat-Spinnlösung zu bilden, wobei die Cellulosecarbamat-Spinnlösung Zink umfasst,
- Spinnen der Cellulosecarbamat-Spinnlösung in ein wässriges alkalisches Spinnbad in einer Spinneinheit, wobei das wässrige alkalische Spinnbad Natriumcarbonat als alkalisches Koagulationssalz, wässriges Natriumhydroxid, Zink, freies Ammoniak und andere stickstoffhaltige Verbindungen umfasst, um Filamente oder Filamentbündel zu bilden,
- Dehnen der Filamente oder des Filamentbündels, um gedehnte Cellulosecarbamatfasern zu erhalten, und
- Entnehmen eines Abschnitts des alkalischen Spinnbades aus der Spinneinheit zur Wiederverwendung gemäß dem Wiederverwendungsverfahren nach einem der vorstehenden Ansprüche.

## Revendications

1. Procédé de recyclage d'un bain de filage alcalin aqueux utilisé dans la fabrication de fibres textiles en carbamate de cellulose, comprenant les étapes de :
- alimentation d'une solution de filage de carbamate de cellulose dans un bain de filage alcalin aqueux dans une unité de filage, dans lequel le bain de filage alcalin aqueux comprend du carbonate de sodium comme sel de coagulation alcalin, de l'hydroxyde de sodium aqueux, du zinc, de l'ammoniac libre et d'autres composés azotés,
- prélèvement d'une partie du bain de filage alcalin aqueux,
- évaporation d'au moins une partie de l'eau et de l'ammoniac libre présents dans la portion prélevée du bain de filage aqueux pour obtenir un bain de filage aqueux concentré,
- soumission du bain de filage aqueux concentré à une première cristallisation sous vide pour récupérer une première partie du carbonate de sodium et obtenir un bain de filage résiduel,
- concentration du bain de filage résiduel par évaporation pour obtenir un bain de filage plus concentré,
- soumission du bain de filage plus concentré à une seconde cristallisation sous vide pour récupérer une seconde partie du carbonate de sodium et obtenir une liqueur mère du bain de filage, et
- renvoi d'au moins une partie du carbonate de sodium récupéré dans le bain de filage alcalin aqueux.

2. Procédé selon l'une quelconque des revendications précédentes, dans lequel la solution de filage de carbamate de cellulose est obtenue par dissolution de carbamate de cellulose dans un milieu aqueux d'hydroxyde de sodium, dans lequel la solution de filage de carbamate de cellulose comprend un composé de zinc dissous.

3. Procédé selon l'une quelconque des revendications précédentes, dans lequel la partie prélevée du bain de filage alcalin aqueux de la solution de filage de carbamate de cellulose comprend 1,0 à 1,99 % en poids d'hydroxyde de sodium et 22 à 30 % en poids de carbonate de sodium, calculés à partir du poids total du bain de filage alcalin aqueux.

4. Procédé selon l'une quelconque des revendications précédentes, dans lequel le bain de filage aqueux concentré soumis à la première cristallisation sous vide présente une température comprise entre 25 et 75 °C, de préférence entre 30 et 45 °C, par exemple environ 30 °C, de préférence à une pression d'au moins 100 kPa.

5. Procédé selon l'une quelconque des revendications précédentes, dans lequel le bain de filage aqueux concentré soumis à la seconde cristallisation sous vide présente une température comprise entre 15 et 40 °C, de préférence entre 20 et 30 °C, par exemple 24 °C, de préférence à une pression d'au moins 75 kPa.

6. Procédé selon l'une quelconque des revendications précédentes, dans lequel la première et/ou la seconde cristallisation sous vide est réalisée comme une cristallisation par étapes comprenant au moins deux, de préférence 2 à 8, plus préférentiellement 3 à 7, par exemple 6, étapes de récupération consécutives, c'est-à-dire de cristallisation et de séparation.

7. Procédé selon l'une quelconque des revendications précédentes, dans lequel l'énergie libérée pendant la première et/ou la seconde cristallisation sous vide est recyclée dans le processus, en particulier l'énergie libérée lors de la ou des cristallisations est réutilisée pour redissoudre le sel de coagulation récupéré avant de le renvoyer dans le bain de filage alcalin aqueux de l'unité de filage.

8. Procédé selon l'une quelconque des revendications précédentes, dans lequel le bain de filage résiduel à partir de la première cristallisation sous vide est concentré à l'aide d'un évaporateur à recompression mécanique de la vapeur.

9. Procédé selon l'une quelconque des revendications précédentes, comprenant en outre une étape de soumission de la liqueur mère à une ultrafiltration pour récupérer le polyéthylène glycol (PEG) de la liqueur mère, dans lequel le PEG récupéré est de préférence recyclé dans une étape de dissolution du carbamate de cellulose du processus de fabrication de fibres textiles en carbamate de cellulose, en particulier dans l'étape de dissolution du carbamate de cellulose selon la revendication 2, en tant qu'activateur de solution de filage.

10. Procédé selon la revendication 9, comprenant en outre, après l'ultrafiltration, une étape de soumission du PEG récupéré à une diafiltration.

11. Procédé selon l'une quelconque des revendications précédentes, dans lequel le procédé comprend en outre, de préférence après l'ultrafiltration ou l'ultrafiltration couplée à une diafiltration, une étape de soumission de la liqueur mère à une nanofiltration pour récupérer de l'hydroxyde de sodium chimiquement pur, dans lequel l'hydroxyde de sodium chimiquement pur est de préférence recyclé dans une étape de dissolution du carbamate de cellulose du processus de fabrication de fibres textiles en carbamate de cellulose, et en particulier dans l'étape de dissolution du carbamate de cellulose selon la revendication 2.

12. Procédé selon l'une quelconque des revendications précédentes, dans lequel le procédé comprend en outre, de préférence après l'ultrafiltration, la diafiltration et/ou la nanofiltration, une étape de soumission de la liqueur mère à une cristallisation par évaporation pour récupérer le carbonate de sodium sous forme monohydratée, dans lequel la liqueur mère résiduelle comprend de l'hydroxyde de sodium et un composé de zinc dissous.

13. Procédé selon l'une quelconque des revendications précédentes, dans lequel la liqueur mère, comprenant de préférence de l'hydroxyde de sodium et un composé de zinc dissous, est recyclée dans une étape de dissolution du carbamate de cellulose du processus de fabrication de fibres textiles en carbamate de cellulose, en particulier dans l'étape de dissolution du carbamate de cellulose selon la revendication 2.

14. Procédé selon l'une quelconque des revendications précédentes, dans lequel la liqueur mère comprend, en particulier après une ou plusieurs des opérations d'ultrafiltration, de diafiltration, de nanofiltration et de cristallisation par évaporation, au plus 1 % en poids de carbonate de sodium, de préférence au plus 0,5 % en poids de carbonate de sodium, et 40 à 70 % en poids d'eau, 20 à 40 % en poids d'hydroxyde de sodium et 5 à 25 % en poids de zincate de sodium, calculés à partir du poids total de la liqueur mère.

15. Procédé selon l'une quelconque des revendications précédentes, dans lequel le carbonate de sodium est au moins essentiellement récupéré sous forme de décahydrate de carbonate de sodium, de préférence au moins 98 % en poids du carbonate de sodium est récupéré sous forme de décahydrate, plus préférentiellement au moins 99 % en poids, le plus préférentiellement 100 % en poids, calculés à partir du poids total du carbonate de sodium récupéré.

16. Procédé selon l'une quelconque des revendications précédentes, dans lequel au moins 90 % en poids, de préférence au moins 95 % en poids, plus préférentiellement au moins 99 % en poids, du carbonate de sodium de la partie prélevée du bain de filage sont récupérés par les première et seconde cristallisations sous vide.

17. Procédé de fabrication de fibres textiles en carbamate de cellulose, comprenant les étapes de :
- dissolution du carbamate de cellulose dans un milieu aqueux d'hydroxyde de sodium pour former une solution de filage de carbamate de cellulose, dans lequel la solution de filage de carbamate de cellulose comprend du zinc,
- filage de la solution de filage de carbamate de cellulose dans un bain de filage alcalin aqueux dans une unité de filage, dans lequel le bain de filage alcalin aqueux comprend du carbonate de sodium comme sel de coagulation alcalin, de l'hydroxyde de sodium aqueux, du zinc, de l'ammoniac libre et d'autres composés azotés, pour former des filaments ou un câble de filaments,
- étirement des filaments ou du câble de filaments pour obtenir des fibres en carbamate de cellulose étirées, et
- prélèvement d'une partie du bain de filage alcalin de l'unité de filage en vue d'un recyclage selon le procédé de recyclage selon l'une quelconque des revendications précédentes.
